# EUROPÄISCHE PATENTSCHRIFT

(11) **EP 3 472 497 B1**
(45) Veröffentlichungstag und Bekanntmachung des Hinweises auf die Patenterteilung: **01.01.2020**
(21) Anmeldenummer: 17734230.0
(22) Anmeldetag: 13.06.2017
(51) Int. Cl.: F16H 63/34

(54) **PARKSPERRE FÜR EIN KRAFTFAHRZEUG**
PARKING LOCK FOR A MOTOR VEHICLE
FREIN DE STATIONNEMENT POUR VEHICULE AUTOMOBILE

(30) Priorität: 15.06.2016 DE 102016210662
(43) Veröffentlichungstag der Anmeldung: 24.04.2019
(73) Patentinhaber: Schaeffler Technologies AG & Co. KG, 91074 Herzogenaurach (DE)
(72) Erfinder: ROST, Markus, 91074 Herzogenaurach (DE); KRÄMER, Klaus, 91438 Lenkersheim (DE); LOEFFELMANN, Jochen, 91330 Eggolsheim (DE)
(86) Internationale Anmeldenummer: PCT/DE2017/100496
(87) Internationale Veröffentlichungsnummer: WO 2017/215709

(56) Entgegenhaltungen:
- EP-A1- 1 447 291
- DE-A1- 10 040 077
- US-A1- 2008 169 168

## Beschreibung

### Gebiet der Erfindung

Die Erfindung betrifft eine Parksperre für ein Kraftfahrzeug.

### Hintergrund der Erfindung

Eine Parksperre ist aus der DE 10 2010 053 857 A1 bekannt. Eine ähnliche Lösung zeigt die DE 10 2011 080 498 A1. Bei der letztgenannten Lösung kommt als mechanisches Getriebeelement zur Übertragung der Bewegung des Aktuators auf die Sperrklinke ein Planetenwälzgetriebe zum Einsatz. Damit ist es möglich, relativ hohe Übertragungskräfte zu realisieren.

Beim Parken eines Fahrzeugs beispielsweise an einem Hang erzeugt das Fahrzeuggewicht, abhängig vom Raddurchmesser, von der Getriebeübersetzung und vom Radius des Sperrrads (Sperrverzahnung) eine Kraft auf die geschlossene Klinke und somit wiederrum auf den Parksperrenmechanismus. Beim Entriegeln der Parksperre am Hang muss somit diese anliegende Kraft überwunden werden. Da man versucht, den Aktuator hinsichtlich der Leistung und der Stromaufnahme so klein wie möglich zu gestalten, so dass dieser im Notfall auch noch mit der Spannung und Stromaufnahme von der Bord-Batterie betrieben werden kann, steht nur eine beschränkte Entriegelungskraft zur Verfügung. Diese kann durch die Übersetzung wiederum nur begrenzt gesteigert werden, da sonst die erforderlichen Stellwege der Mechanik nicht ausreichen.

Eine Parksperre benötigt also zum Auslegen der Sperrklinke, d. h. zum Verbringen derselbe in die entriegelte Position, eventuell eine relativ große Kraft. Diese kann sich aus der Geometrie zwischen dem Klinkenzahn und der Ausnehmung in der Sperrverzahnung ergeben, namentlich durch einen entsprechenden Hinterlegungswinkel. Eine hohe Kraft kann sich auch aufgrund der Reibungsverhältnisse und des realisierten Reibkeils ergeben.

Bei der Lösung gemäß der genannten DE 10 2011 080 498 A1 können zwar hohe Übertragungskräfte realisiert werden, um die Sperrklinke insbesondere von der verriegelten Position aus in die entriegelte Position zu bewegen. Allerdings ist der Aufbau der Lösung relativ aufwendig und somit teuer. Zudem hat die Anordnung nachteilig ein relativ hohes Gewicht.

Um diesen Nachteil zu überwinden, ist es aus US 2008/0169168 A1 bekannt, die Betätigung der Parksperre mit einem Kurbeltrieb zu übersetzen. Beim Einlegen des Automatikwählhebels in Parkstellung wird die vom Fahrer vorgegebene Bewegung übersetzt. Der vorgestellte Aufbau erfordert viele Bauteile und erheblichen, insbesondere axialen Bauraum. Ein weiteres Prinzip nutzt DE 299 23 633 U1, um für einen Automatikwählhebel eine über die Betätigung eine veränderliche Übersetzung zu erzeugen. Eine gattungsgemäße Parksperre ist aus EP 1 447 291 A1 bekannt.

### Aufgabe der Erfindung

Der vorliegenden Erfindung liegt die Aufgabe zugrunde, eine gattungsgemäße Parksperre zu realisieren, die eine kompakte, leichte und kostengünstig zu realisierende Bauweise aufweist, die beim Ausklinken des Klinkenzahns eine hinreichende Kraft entwickelt. Damit soll es möglich werden, einen kleinen und leichten Antrieb zu realisieren, um die Parksperre zu betätigen und so sowohl Gewicht als auch die benötigte elektrische Leistung einzusparen.

### Zusammenfassung der Erfindung

Die Aufgabe wird durch eine Parksperre gemäß Anspruch 1 gelöst.

Der Kurbeltrieb umfasst dabei eine Kurbel und einen Pleuel, die gelenkig (insbesondere nach Art eines Scharniers) miteinander verbunden sind. Die gelenkige Verbindung zwischen der Kurbel und dem Pleuel kann dabei ein Wälzlager umfassen, insbesondere ein Nadellager. Es ist aber auch möglich, dass die gelenkige Verbindung zwischen der Kurbel und dem Pleuel als Gleitlager ausgebildet ist.

Durch die Anordnung des die Kurbel und den Pleuel verbindenden Gelenks axial zwischen dem Klinkenzahn und dem Anlenkpunkt des Pleuels am Klinkenbetätigungselement baut die Parksperre besonders kompakt. Durch die axiale Verschachtelung wird daher Bauraum in der Länge des Pleuelarms eingespart.

Die als Scharnier ausgebildete gelenkige Verbindung zwischen der Kurbel und dem Pleuel weist eine Schwenkachse auf, wobei bei Projektion der Schwenkachse auf die Drehachse der Sperrklinke vorzugsweise zwischen Schwenkachse und Drehachse ein rechter Winkel vorliegt. Dadurch kann das Parksperrengehäuse in tangentialer Richtung zum Parksperrenrad besonders kurz ausfallen.

Der Abstand zwischen den Stellen, an denen der Pleuel gelenkig angebunden ist, beträgt bevorzugt mindestens das Zweifache und in einer speziellen Ausführungsform höchstens das Sechsfache des Abstands, der zwischen der Drehachse des Aktuators und der Schwenkachse zwischen Kurbel und Pleuel vorliegt. Durch die ungleichen Längen wird einerseits das Übersetzungsverhältnis modifiziert. Andererseits und für die Kompaktheit der Parksperre bedeutsamer, erfordert eine kurze Kurbel weniger Bauraum in Richtung der Achse des Parksperrenrads.

Die Übertragung der Bewegung der Akuatorwelle auf die Sperrklinke erfolgt mittels eines Getriebeelements.

Das Getriebeelement umfasst vorzugsweise einen Käfig, in dem eine Anzahl Rollen, vorzugsweise drei Rollen, gelagert sind, wobei der Käfig mit dem Klinkenbetätigungselement des Getriebeelements starr verbunden ist, das vom Kurbeltrieb bewegt wird.

Die genannten Rollen sind vorzugsweise als Wälzlager ausgebildet. Für einen reibungsarmen Lauf ist es ausreichend, wenn die mit der Sperrklinke nicht in direktem Kontakt stehenden Rollen als Wälzlager ausgebildet sind.

Die Sperrklinke weist bevorzugt eine Rampe für den Anlauf einer der Rollen auf.

Die Verbindung zwischen dem Käfig und dem Klinkenbetätigungselement des Getriebeelements ist bevorzugt als Stange ausgebildet. Die Stange wird in einer Ausgestaltung durch eine Schraubenfeder eingehüllt, welche die Parksperrenklinke vorspannt, so dass auch stromlos eine Verriegelung sichergestellt ist.

Die Kompaktheit der Parksperre kann weiter gesteigert werden, wenn die Drehachse der Sperrklinke, die Drehachse der Aktuatorwelle und die Translationsachse des Klinkenbetätigungselements jeweils orthogonal zueinander verlaufen. Dadurch dass jede Übersetzung des Moments ebenfalls die Bewegungsrichtung im dreidimensionalen Raum ändert, wird die Kompaktheit der Anordnung sicher gestellt. Der Effekt stellt sich auch ein, wenn auch schwächer, wenn nur zwei Raumrichtungen genutzt werden oder nicht bei jedem Getriebeteil der Parksperre eine Achsenänderung der Bewegungsrichtung erfolgt, sondern nur bei einigen Getriebeteilen.

Die Sperrklinke ist in einer Ausgestaltung länger als das Klinkenbetätigungselement und die Rollen zusammen in Richtung der Translationsachse des Klinkenbetätigungselements gesehen. Damit baut die gesamte Betätigungseinheit in Richtung der Translationsachse des Klinkenbetätigungselements kürzer als die zur formschlüssigen Verriegelung notwendige Mechanik, so dass eine so ausgestaltete Parksperre keinen zusätzlichen Bauraum in dieser Raumrichtung erfordert.

Ist der maximale Abstand der Schwenkachse (b) von der Translationsachse kleiner als die doppelte Breite der Sperrklinke (4), baut die Parksperre auch in Achsrichtung des Parksperrenrads kompakt. Die Bewegung des Gelenks zwischen dem Pleuel und der Kurbel überstreicht in einer Ausführungsform maximal 45°, besonders bevorzugt maximal 30°. Dadurch wird auch quer zur Translationsachse des Klinkenbetätigungselements wenig Bauraum beansprucht. In einer Ausgestaltung ist der erforderliche Bauraum kleiner als die dreifache Dicke des Pleuels.

In einer nächsten Ausführungsform sind die Kurbel und der Pleuel ausschließlich durch das Gelenk miteinander verbunden. Der Pleuel und die Kurbel sind damit einfach herstellbar. Insbesondere erfolgt durch die Abwesenheit von Ausnehmungen keine Schwächung der Bauteile, und die Länge der Kurbe kann so kurz gewählt werden, dass die Drehachse der Aktuatorwelle und die Schwenkachse dicht beieinander liegen.

Die vorgeschlagene Lösung kommt insbesondere bei Automatikgetrieben von Kraftfahrzeugen sowie bei Elektrofahrzeugen zum Einsatz. Die Betätigung der Parksperre erfolgt vorzugsweise elektrisch mit einem Elektromotor als Aktuator.

Die vorgeschlagene Lösung setzt also erfindungsgemäß einen Kurbeltrieb ein, um die Bewegung des Aktuators in eine Verschwenkung der Sperrklinke zu übertragen. Der Kurbeltrieb veranlasst zu Beginn des Entriegelns zunächst nur eine kleine Bewegung, die allerdings bei relativ hoher Kraft erfolgt. Nachdem die Hinterlegung zwischen dem Klinkenzahn der Sperrklinke und der Ausnehmung in der Sperrverzahnung überwunden ist (was hohe Kräfte erfordert), veranlasst der Kurbeltrieb dann eine relativ große Bewegung, die allerdings bei relativ kleiner Kraft erfolgt. Dieser Weg wird benötigt, um sicher den Entriegelungsvorgang durchführen zu können, wozu dann allerdings keine hohe Kraft mehr erforderlich ist.

Somit nutzt die vorliegende Erfindung die Eigenschaft eines Kurbeltriebs, wonach zu Beginn der Bewegung eine hohe Kraft bei geringem Weg gegeben ist, anschließend dann aber ein großer Verstellweg bei geringer Kraft vorliegt.

In vorteilhafter Weise lässt sich mit der vorgeschlagenen Konzeption ein kleiner und leichter Antrieb für die Parksperre realisieren, der dort sehr hohe Kräfte aufbringen kann, wo diese benötigt werden.

### Kurze Beschreibung der Figuren

In den Figuren ist ein Ausführungsbeispiel der Erfindung dargestellt. Es zeigen:
- Fig. 1: in perspektivischer Darstellung die wesentlichen Bauteile einer Parksperre, wobei sich diese in der verriegelten Position befindet,
- Fig. 2: in der Darstellung gemäß Figur 1 die Parksperre in der entriegelten Position,
- Fig. 3: den Verlauf der von einem Kurbeltrieb der Parksperre erzeugten Kraft und der für den Entriegelungsvorgang benötigten Kraft über dem Bewegungsverlauf des Entriegelungsvorgangs und
- Fig 4: einen Längsschnitt durch eine erfindungsgemäße Parksperre mit einem Gehäuse.

### Ausführliche Beschreibung der Figuren

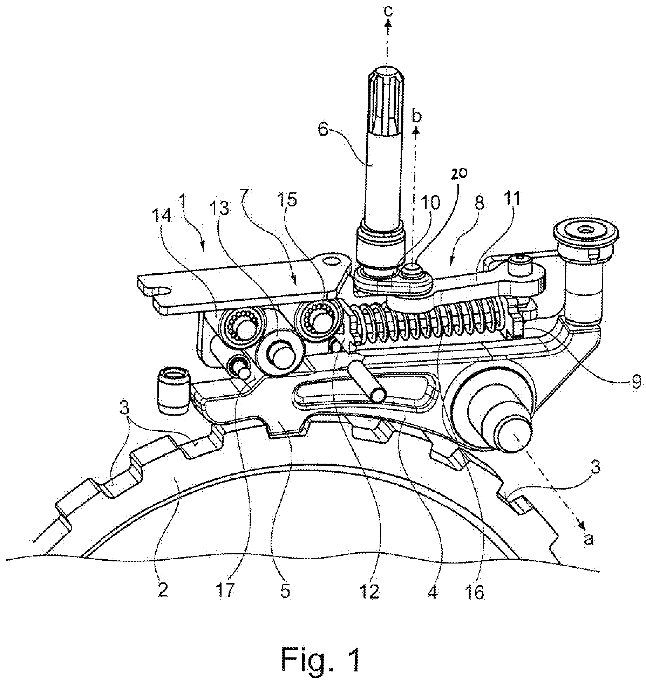

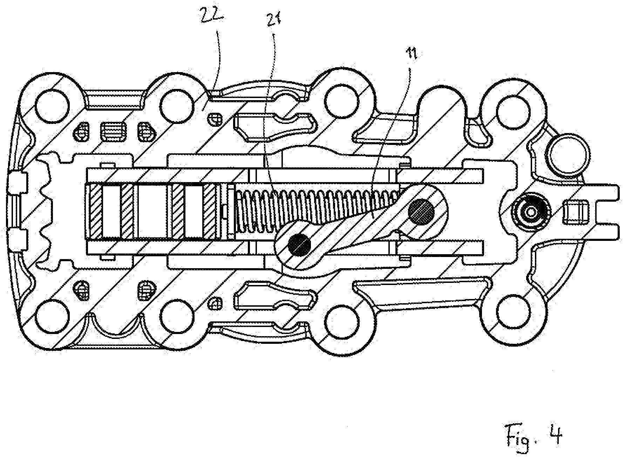

In den Figuren 1, 2 und 4 ist eine Parksperre 1 dargestellt, wobei nur die wesentlichen Funktionsteile dargestellt sind. Abdeckungen und Anbindungsbauteile der Anordnung sind aus Gründen der Übersichtlichkeit weggelassen. Nachfolgend werden die erfindungsrelevanten Merkmale beschrieben, die auf einem grundsätzlichen Baukonzept einer Parksperre basieren, wie sie in der oben genannten DE 10 2010 053 857 A1 und DE 10 2011 080 498 A1 der Anmelderin im Detail erläutert sind. Auf diese vorbekannten Lösungen wird insofern ausdrücklich Bezug genommen, um betreffend das grundsätzliche Funktionsprinzip einer Parksperre Wiederholungen zu vermeiden.

Die Parksperre 1 ist Teil einer Parksperreneinrichtung mit einer Sperrverzahnung 2 eines Parksperrenrads, wobei die Sperrverzahnung 2 eine Anzahl Ausnehmungen 3 an ihrem Umfang aufweist. Weiteres zentrales Bauteil der Parksperre 1 ist eine Sperrklinke 4, die um eine Drehachse a schwenkbar angeordnet ist.

In Figur 1 ist die Sperrklinke 4 in einer nach unten (in Richtung auf die Sperrverzahnung 2 zu) gerichteten Stellung zu sehen, in der ein Klinkenzahn 5 der Sperrklinke 4 in eine der Ausnehmungen 3 der Sperrverzahnung 2 eingreift und so die Anordnung verriegelt.

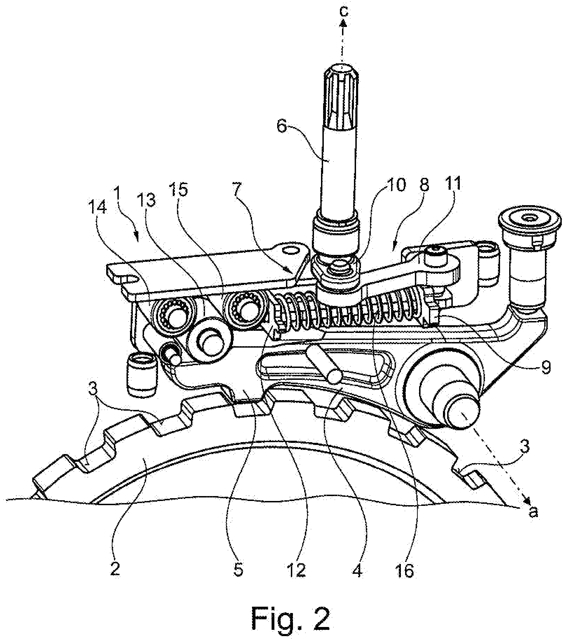

In Figur 2 ist indes die Sperrklinke 4 in einer nach oben (in Richtung von der Sperrverzahnung 2 weg) gerichteten Stellung zu sehen, in der der Klinkenzahn 5 der Sperrklinke 4 nicht in eine Ausnehmung 3 eingreift; demnach ist hier die Parksperre 1 entriegelt.

Die Verriegelung bzw. Entriegelung der Parksperre 1 erfolgt über eine Aktuatorwelle 6, die für das Ver- bzw. Entriegeln um eine Drehachse c dreht. Die Aktuatorwelle 6 ist Teil eines elektrischen Aktuators.

Die Übertragung der Bewegung der Aktuatorwelle 6 auf die Sperrklinke 4 erfolgt mittels eines Getriebeelements 7. Wie bei den genannten vorbekannten Lösungen umfasst das Getriebeelement 7 einen linearverschieblichen Käfig 12, in dem drei Rollen 13, 14 und 15 gelagert sind.

Die Rolle 13 kann dabei Kontakt mit einer Rampe 17 nehmen (s. Fig. 1), die an der Sperrklinke 4 ausgebildet ist. Bei linearer Bewegung des Käfigs 12 - vergleiche hierzu die beiden Stellungen des Käfigs 12 und der Rollen 13, 14, 15 in den Figuren 1 und 2 - wird folglich die Sperrklinke 4 verschwenkt.

Bei den oben genannten vorbekannten Lösungen ist dies näher beschrieben, weshalb auf diese Druckschriften Bezug genommen wird.

Im vorliegenden Falle ist es wesentlich, dass das Getriebeelement 7 einen Kurbeltrieb 8 umfasst, mit dem ein Klinkenbetätigungselement 9 des Getriebeelements 7 linear bewegt werden kann.

Zwischen dem Klinkenbetätigungselement 9 und dem Käfig 12 ist eine Stange 16 angeordnet, so dass sich eine lineare Bewegung des Klinkenbetätigungselements 9 auf den Käfig 12 überträgt. Der Kurbeltrieb 8 hat dabei eine Kurbel 10 und einen Pleuel 11, die gelenkig miteinander verbunden sind. Die Kurbel 10 ist mit dem Aktuator 6 drehfest verbunden. Der Pleuel 11 ist mit dem Klinkenbetätigungselement 9 gelenkig verbunden.

Wird nun der Aktuator der Aktuatorwelle 6 betrieben, d. h. erfolgt eine Drehung um die Achse c, bewegt sich die Kurbel 10 entsprechend mit und zieht den Pleuel 11 mit.

Mit dem Kurbeltrieb 8 kann - aufgrund der Eigenschaft eines Kurbeltriebs - nun bei gleichem, kleinem anliegenden Drehmoment am Aktuator anfangs eine große Kraft zum Entriegeln realisiert werden, ohne den Gesamtstellweg zu reduzieren. Gegen zunehmenden Stellwinkel bzw. -weg nimmt die Kraft dann ab, was in diesem Fall aber nicht stört, da eine große Kraft nur anfangs benötigt wird, bis (in diesem Fall) die Rolle 13 den Hochpunkt der Rampe 17 der Sperrklinke 4 erreicht hat und die Verriegelung der Sperrklinke durch die Rolle 13 somit aufgehoben wird.

Wie Figur 1 zu entnehmen ist, weist die Schwenkachse b der scharnierartigen Verbindung zwischen der Kurbel 10 und dem Pleuel 11 in vertikaler Richtung, während die Drehachse a der Sperrklinke 4 in horizontale Richtung weist. Projiziert man demgemäß die Schwenkachse b auf die Drehachse a, sind diese beiden Achsen zueinander rechtwinklig ausgerichtet.

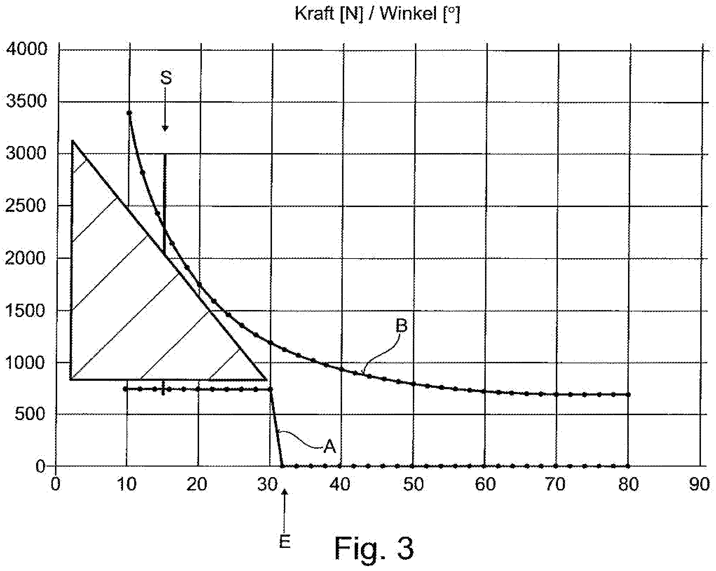

In Figur 3 ist der Verlauf der von dem Kurbeltrieb 8 der Parksperre 1 erzeugten Kraft und der für den Entriegelungsvorgang benötigten Kraft über dem Bewegungsverlauf des Entriegelungsvorgangs skizziert.

Die Kurve A gibt den Verlauf der benötigten Kraft an, um den Entriegelungsvorgang durchzuführen, d. h. den Klinkenzahn 5 der Sperrklinke 4 aus der Ausnehmung 3 der Sperrverzahnung 2 herauszuziehen.

Die Kurve B gibt den Verlauf der Kraft an, die mit dem Kurbeltrieb 8 erzeugt werden kann. Auf der Ordinate sind jeweilige Kräfte in Newton angegeben, auf der Abszisse befindet sich der Drehweg der Aktuatorwelle 6 in Winkelgrad.

Der Entriegelungsvorgang startet in der Position S bei ca. 15° Winkelstellung der Aktuatorwelle 6. In der Position E bei etwas über 30° Winkelstellung der Aktuatorwelle 6 ist der Entriegelungsvorgang abgeschlossen. Ab dieser Position wird dann die befreite Sperrklinke 4 nur noch aus dem Kollisionsbereich der Sperrverzahnung 2 herausgezogen, wofür nur noch minimale Kräfte benötigt werden.

Wie zu erkennen ist, ist die vom Kurbeltrieb 8 erzeugte Kraft über den gesamten Entriegelungsvorgang größer, als sie für den Entriegelungsvorgang benötigt wird; dies ist durch den markierten schraffierten dreieckförmigen Bereich in Figur 3 angedeutet.

Demgemäß ist auch bei einer leichten und kleinen Ausgestaltung des Getriebeelements 7 mit dem Kurbeltrieb 8 stets eine hinreichende Entriegelungskraft vorhanden.

Die Kurbel 10 ist vorliegend als ein im Querschnitt triovales Bauteil ausgebildet, das eine Dreieckskontur mit verrundeten Ecken aufweist.

### Bezugszeichenliste

- 1: Parksperre
- 2: Sperrverzahnung
- 3: Ausnehmung
- 4: Sperrklinke
- 5: Klinkenzahn
- 6: Aktuatorwelle
- 7: Getriebeelement
- 8: Kurbeltrieb
- 9: Klinkenbetätigungselement
- 10: Kurbel
- 11: Pleuel
- 12: Käfig
- 13: Rolle
- 14: Rolle
- 15: Rolle
- 16: Stange
- 17: Rampe
- 20: Gelenk
- 21: Feder
- 22: Gehäuse

- a: Drehachse der Sperrklinke
- b: Schwenkachse der Verbindung zwischen Kurbel und Pleuel
- c: Drehachse des Aktuators
- d: Translationsachse des Klinkenbetätigungselements

## Patentansprüche

1. Parksperre (1) für ein Kraftfahrzeug, wobei die Parksperre (1) aufweist:
- eine Sperrklinke (4), die um eine Drehachse (a) schwenkbar angeordnet ist und einen Klinkenzahn (5) aufweist, der zum formschlüssigen Eingriff in eine Ausnehmung (3) einer Sperrverzahnung (2) ausgebildet ist,
- eine um eine weitere Drehachse (c) drehbare Aktuatorwelle (6) zur Betätigung der Sperrklinke (4), so dass diese reversibel mit ihrem Klinkenzahn (5) in Eingriff mit der Ausnehmung (3) gebracht werden kann,
- ein linear entlang einer Translationsachse (d) verschiebliches Klinkenbetätigungselement (9), wobei durch dessen Linearverschiebung die Schwenkbewegung der Sperrklinke (4) erzeugbar ist,
- einen Kurbeltrieb (8) mit einer Kurbel (10) und einem Pleuel (11), wobei mit dem Kurbeltrieb (8) eine Drehbewegung der Aktuatorwelle (6) in die Linearbewegung des Klinkenbetätigungselements (9) umgewandelt werden kann,
- ein Gelenk (20), das die Kurbel (10) und den Pleuel (11) miteinander verbindet, wobei der Pleuel (11) über einen Anlenkpunkt mit dem Klinkenbetätigungselement (9) gelenkig verbunden ist,
**dadurch gekennzeichnet, dass**
- das Gelenk (20) in Linearverschiebungsrichtung des Klinkenbetätigungselements (9) gesehen zwischen dem Klinkenzahn (5) und dem Anlenkpunkt des Pleuels (11) am Klinkenbetätigungselement (9) angeordnet ist.

2. Parksperre nach Anspruch 1, **dadurch gekennzeichnet, dass** das Gelenk (20) zwischen der Kurbel (10) und dem Pleuel (11) eine Schwenkachse (b) aufweist, wobei bei Projektion der Schwenkachse (b) auf die Drehachse (a) der Sperrklinke (4) zwischen Schwenkachse (b) und Drehachse (a) ein rechter Winkel vorliegt.

3. Parksperre nach Anspruch 1 oder 2, **dadurch gekennzeichnet, dass** die Drehachse (a) der Sperrklinke (4), die Drehachse (c) der Aktuatorwelle (6) und die Translationsachse (d) des Klinkenbetätigungselements (9) jeweils orthogonal zueinander angeordnet sind.

4. Parksperre nach einem der Ansprüche 2 oder 3, **dadurch gekennzeichnet, dass** die Drehachse (a) der Sperrklinke (4) und die Schwenkachse (b) der Kurbel (10) und des Pleuels (11) zueinander parallel angeordnet sind.

5. Parksperre nach einem der Ansprüche 1 bis 4, **dadurch gekennzeichnet, dass** der Abstand zwischen den Stellen, an denen der Pleuel (11) gelenkig angebunden ist, mindestens das Zweifache des Abstands beträgt, der zwischen der Drehachse des Aktuators (c) und der Schwenkachse (b) zwischen der Kurbel (10) und dem Pleuel (11) vorliegt.

6. Parksperre nach einem der Ansprüche 1 bis 5, **dadurch gekennzeichnet, dass** die Übertragung der Bewegung der Akuatorwelle (6) auf die Sperrklinke (4) mittels eines Getriebeelements (7) erfolgt, wobei das Getriebeelement (7) einen Käfig (12) umfasst, in dem mehrere Rollen (13, 14, 15) gelagert sind, wobei der Käfig (12) mit dem Klinkenbetätigungselement (9) des Getriebeelements (7) starr verbunden ist.

7. Parksperre nach Anspruch 6, **dadurch gekennzeichnet, dass** die Verbindung zwischen dem Käfig (12) und dem Klinkenbetätigungselement (9) des Getriebeelements (7) als Stange (16) ausgebildet ist, welche durch eine Feder (21) vorgespannt ist, die als Schraubendruckfeder die Stange (16) umschließt.

8. Parksperre nach Anspruch 7, **dadurch gekennzeichnet, dass** die Sperrklinke (4) in Richtung der Translationsachse (d) länger ausgebildet ist als das Klinkenbetätigungselement (9) mit den Rollen (13, 14, 15).

9. Parksperre nach einem der vorhergehenden Ansprüche, **dadurch gekennzeichnet, dass** die Parksperre (1) einen Elektromotor aufweist, welcher die Aktuatorwelle (6) antreibt.

10. Parksperre nach einem der vorhergehenden Ansprüche, **dadurch gekennzeichnet, dass** der maximale Abstand der Schwenkachse (b) von der Translationsachse (d) kleiner ist als die doppelte Breite der Sperrklinke (4).

11. Parksperre nach einem der vorhergehenden Ansprüche, **dadurch gekennzeichnet, dass** die Kurbel (10) und der Pleuel (11) ausschließlich durch das Gelenk (20) miteinander verbunden sind.

## Claims

1. A parking lock (1) for a motor vehicle, the parking lock (1) comprising:
- a locking pawl (4), which is pivotably arranged about a rotation axis (a) and has a pawl tooth (5) which is formed for positive engagement in a recess (3) of a pawl toothing (2),
- an actuator shaft (6) rotatable about a further axis of rotation (c) for actuating the locking pawl (4) so that, with the pawl tooth (5) thereof, it can be brought reversibly into engagement with the recess (3),
- a pawl actuating element (9) linearly displaceable along a translation axis (d), the pivoting movement of the locking pawl (4) being generatable by the linear displacement thereof,
- a crank drive (8) with a crank (10) and a connecting rod (11), a rotational movement of the actuator shaft (6) being convertible into the linear movement of the pawl actuating element (9) with the crank drive (8),
- a joint (20) which connects the crank (10) and the connecting rod (11) to each other, the connecting rod (11) being articulated to the pawl actuating element (9) via an articulation point,
**characterised in that**
- the joint (20) is arranged in the linear displacement direction of the pawl actuating element (9) seen between the pawl tooth (5) and the articulation point of the connecting rod (11) on the pawl actuating element (9).

2. The parking lock according to claim 1, **characterised in that** the joint (20) between the crank (10) and the connecting rod (11) has a pivot axis (b), wherein, upon projection of the pivot axis (b) onto the axis of rotation (a) of the locking pawl (4), a right angle is present between pivot axis (b) and axis of rotation (a).

3. The parking lock according to claim 1 or 2, **characterised in that** the axis of rotation (a) of the locking pawl (4), the axis of rotation (c) of the actuator shaft (6), and the translation axis (d) of the pawl actuating element (9) are each arranged to be orthogonal to each other.

4. The parking lock according to one of claims 2 or 3, **characterised in that** the axis of rotation (a) of the locking pawl (4) and the pivot axis (b) of the crank (10) and the connecting rod (11) are arranged to be parallel to each other.

5. The parking lock according to one of claims 1 through 4, **characterised in that** the distance between the points at which the connecting rod (11) is hinged amounts to at least twice the distance that is present between the axis of rotation of the actuator (c) and the pivot axis (b) between the crank (10) and the connecting rod (11).

6. The parking lock according to one of claims 1 through 5, **characterised in that** the transmission of the movement of the actuator shaft (6) on the locking pawl (4) occurs by means of a transmission element (7), wherein the transmission element (7) comprises a cage (12) in which are mounted a plurality of rollers (13, 14, 15), wherein the cage (12) is rigidly connected with the pawl actuating element (9) of the transmission element (7).

7. The parking lock according to claim 6, **characterised in that** the connection between the cage (12) and the pawl actuating element (9) of the transmission element (7) is formed as a rod (16), which is pre-tensioned by a spring (21) which encloses the bar (16) as a helical compression spring.

8. The parking lock according to claim 7, **characterised in that** the locking pawl (4) is formed to be longer than the pawl actuating element (9) with the rollers (13, 14, 15) in the direction of the translation axis (d).

9. The parking lock according to one of the preceding claims, **characterised in that** the parking lock (1) has an electric motor which drives the actuator shaft (6).

10. The parking lock according to one of the preceding claims, **characterised in that** the maximum distance of the pivot axis (b) from the translation axis (d) is smaller than twice the width of the locking pawl (4).

11. The parking lock according to one of the preceding claims, **characterised in that** the crank (10) and the connecting rod (11) are interconnected exclusively by the joint (20).

## Revendications

1. Frein de stationnement (1) pour véhicule automobile, le frein de stationnement (1) comprenant :
- un cliquet (4) monté pivotant autour d'un axe de rotation (a) et présentant une dent (5) de cliquet conçue pour s'engrener par complémentarité de forme dans un évidement (3) d'une denture (2) de blocage,
- un arbre d'actionnement (6) pouvant tourner autour d'un autre axe de rotation (c) pour actionner le cliquet (4) de manière à ce qu'il puisse s'engrener de manière réversible avec sa dent de cliquet (5) dans l'évidement (3),
- un élément d'actionnement (9) de cliquet pouvant se déplacer linéairement le long d'un axe de translation (d), le mouvement de pivotement du cliquet (4) pouvant être généré par son déplacement linéaire,
- une commande à manivelle (8) comprenant une manivelle (10) et une bielle (11), un mouvement de rotation de l'arbre d'actionnement (6) pouvant être converti en un mouvement linéaire de l'élément d'actionnement (9) de cliquet par la commande à manivelle (8),
- une articulation (20) qui relie la manivelle (10) et la bielle (11) l'une à l'autre, la bielle (11) étant reliée de manière articulée à l'élément d'actionnement (9) de cliquet par un point d'articulation,
**caractérisé en ce que**
- l'articulation (20) est disposée dans la direction de déplacement linéaire de l'élément d'actionnement (9) de cliquet entre la dent (5) de cliquet et le point d'articulation de la bielle (11) sur l'élément d'actionnement (9) de cliquet.

2. Frein de stationnement selon la revendication 1, **caractérisé en ce que** l'articulation (20) présente entre la manivelle (10) et la bielle (11) un axe de pivotement (b), la projection de l'axe de pivotement (b) sur l'axe de rotation (a) du cliquet (4) entre l'axe de pivotement (b) et l'axe de rotation (a) formant un angle droit.

3. Frein de stationnement selon la revendication 1 ou 2, **caractérisé en ce que** l'axe de rotation (a) du cliquet (4), l'axe de rotation (c) de l'arbre d'actionnement (6) et l'axe de translation (d) de l'élément d'actionnement (9) de cliquet sont respectivement orthogonaux les uns par rapport aux autres.

4. Frein de stationnement selon l'une des revendications 2 ou 3, **caractérisé en ce que** l'axe de rotation (a) du cliquet (4) et l'axe de pivotement (b) de la manivelle (10) et de la bielle (11) sont parallèles l'un à l'autre.

5. Frein de stationnement selon l'une des revendications 1 à 4, **caractérisé en ce que** la distance entre les points auxquels la bielle (11) est reliée de manière articulée est égale au moins au double de la distance entre l'axe de rotation de l'actionneur (c) et l'axe de pivotement (b) entre la manivelle (10) et la bielle (11).

6. Frein de stationnement selon l'une des revendications 1 à 5, **caractérisé en ce que** la transmission du mouvement de l'arbre d'actionnement (6) au cliquet (4) s'effectue au moyen d'un élément de transmission (7), l'élément de transmission (7) comprenant une cage (12), dans laquelle sont montés plusieurs rouleaux (13, 14, 15), la cage (12) étant reliée rigidement à l'élément d'actionnement (9) du cliquet de l'élément de transmission (7).

7. Frein de stationnement selon la revendication 6, **caractérisé en ce que** la liaison entre la cage (12) et l'élément d'actionnement (9) du cliquet de l'élément de transmission (7) est conçue sous la forme de tige (16), qui est précontrainte par un ressort (21) qui enserre la tige (16) sous forme de ressort de compression.

8. Frein de stationnement selon la revendication 7, **caractérisé en ce que** le cliquet (4) est plus long dans la direction de l'axe de translation (d) que l'élément d'actionnement (9) du cliquet avec les rouleaux (13, 14, 15).

9. Frein de stationnement selon l'une des revendications précédentes, **caractérisé en ce que** le frein de stationnement (1) comporte un moteur électrique qui entraîne l'arbre de l'actionnement (6).

10. Frein de stationnement selon l'une des revendications précédentes, **caractérisé en ce que** la distance maximale entre l'axe de pivotement (b) et l'axe de translation (d) est inférieure à deux fois la largeur du cliquet (4).

11. Frein de stationnement selon l'une des revendications précédentes, **caractérisé en ce que** la manivelle (10) et la bielle (11) sont reliées l'une à l'autre exclusivement par l'articulation (20).
